# EUROPEAN PATENT APPLICATION

(11) **EP 2 544 037 A1**
(43) Date of publication of application: **09.01.2013**
(21) Application number: 11750230.2
(22) Date of filing: 22.02.2011
(51) Int. Cl.: G02B 21/00

(54) **INSTRUMENT FOR THE REALISATION OF WIDE-FIELD IMAGES AT DIVERSE DEPTHS OF A SPECIMEN**

(30) Priority: 05.03.2010 ES 201030320
(71) Applicant: Consejo Superior De Investigaciones Científicas (CSIC), 28006 Madrid (ES)
(72) Inventor: FERRER MOREU, Andrés, E-28006 Madrid (ES); SIEGEL, Jan, E-28006 Madrid (ES); DORRONSORO DÍAZ, Carlos, E-28006 Madrid (ES); SOLIS CÉSPEDES, Francisco Javier, E-28006 Madrid (ES)
(74) Representative: Ungria López, Javier
(86) International application number: PCT/ES2011/070111
(87) International publication number: WO 2011/107642

(57) **Abstract**

Instrument for obtaining wide field images of a specimen comprising (1) a divergence disperser, generating within a light beam different divergences in each of the chromatic components thereof to form images of the specimen at different depths thereof, and (2) a wavelength analyser, selecting the wavelength or interval of wavelengths of the light beam to form the image of the specimen at a specific depth. The light beam may be mono- or polychromatic and the instrument may have a configuration of illumination by transmission or by reflection. The instrument may moreover be modified through diverse configurations of the divergence disperser and/or of the wavelength analyser, including the motorisation thereof or the inclusion of a movable mask, together with being coupled to a CCD or CMOS camera to integrate the diverse images acquired from all sections of the specimen.

## Description

The present invention refers, in general, to the field of optics and particularly to the field of optical microscopy.

### BACKGROUND OF THE INVENTION

A common need in the field of optical microscopy is to select the depth of the specimen section that is to be imaged, no matter if the image is recorded by means of a camera or by direct visual inspection. Often this need extends to obtain images corresponding to several different depths. A possible solution is to modify, by means of mechanical elements (manually or by using motorized stages), the specimen position (as in a conventional microscope) or the position of the microscope objective (as in an inverted microscope, see for instance patent US 6,160,662) in order to select the plane of the specimen to be imaged. This way it is possible to obtain images of planes at different depths, which can be used to reconstruct a single image with extended depth of field. However, using this approximation the resulting image is defocused as the contribution of out-of-focus light is not filtered out.

A solution to suppress the contribution of out-of-focus light is given in the field of confocal microscopy techniques (US patent 3,013,467). In this approximation, the insertion of an aperture in a conjugated plane of the imaging path ensures the formation of the image of a single point of the specimen without the contribution of light emerging from other points of the same focal plane or from other planes of the specimen. The formation of images with light coming only from a given plane without contribution of out-of-focus light is called optical sectioning and has the advantage of providing higher image contrast.

Confocal microscopes have the disadvantage that only the image of a single point or a limited set of points the specimen plane is formed in the image plane of the instrument. In order to obtain a complete two-dimensional image of the selected plane it is necessary to perform a point-by-point scan of the specimen in the direction transversal to the optical axis of the system (confocal scanning microscopy). This implies that the time required to build up an image of the plane under inspection is, in general, longer than for a conventional microscope. In addition, as for a conventional microscope, in order to access planes located at different depths a mechanical adjustment is necessary in order to modify the relative distance between microscope objective and specimen.

"Chromatic confocal microscopy" (US patent 6,038,066) is a variation of confocal microscopy that allows, for each point, accessing planes located at different depths. With this approach depth is coded in terms of wavelength by the use of a deliberately introduced amount of chromatic aberration in the system. Still, this approach requires, as for standard confocal microscopy, a scanning of the sample transversal to the optical axis in order to build up an image of the specimen.

An alternative strategy for performing optical sectioning is the use of illumination with structured light (US patent 6,819,415). In this technique, a transmission mask (typically a periodic bar grating) is placed in the illumination path of a conventional optical microscope, specifically in a plane with the image plane. In this way the pattern is projected onto the specimen with the corresponding demagnification factor. Typically, a set of images of the specimen, corresponding to different lateral positions of the mask, is recorded with a camera. The final image is built up by combining these images after filtering the low spatial frequencies, which correspond to the contribution of out-of-focus light. This way the recovered information corresponds only to the focal plane (optical sectioning).

This optical sectioning technique has reached a high development stage (e.g. Siegel et al., Opt. Lett. 26, 1338-1340, (2001)) and is, in its basic form, relatively common at the commercial level. Yet, as the approximations previously described, it is limited to a single observation plane depth and requires the relative movement between microscope objective and specimen in order to obtain optical cross sections at different depths.

The present invention comprises an instrument that overcomes the two main limitations described above: 1) the need of selecting the observation plane by moving the microscope objective with respect to the specimen along the optical axis of the system and 2) the need of scanning the sample transversally to the optical axis of the system in order to generate a two-dimensional image. This instrument allows selecting precisely the depth of the plane in the specimen to be imaged without using mechanical moving elements to modify the relative position of the specimen, which would increase the product cost. In addition, being a non-confocal, wide field approach, a two-dimensional image is formed directly, thus eliminating the need of scanning the sample position in the direction transversal to the optical axis, which considerably slows down the image acquisition process. The present invention thus overcomes the main limitations described above, resulting in a microscopy instrument that is simpler, more robust, and has a lower production cost.

### DESCRIPTION OF THE INVENTION

The present invention consists in an instrument for obtaining images at different depths of a specimen. The instrument comprises at least one divergence dispersing system (DDS) and one wavelength analyzer (WA), which are configured in such a way that images obtained for different wavelengths correspond to different specimen depths. Specifically, this instrument does not require a relative movement between microscope objective and specimen in any of the three spatial axes, neither for acquiring any of the images nor for selecting their corresponding depth in the specimen.

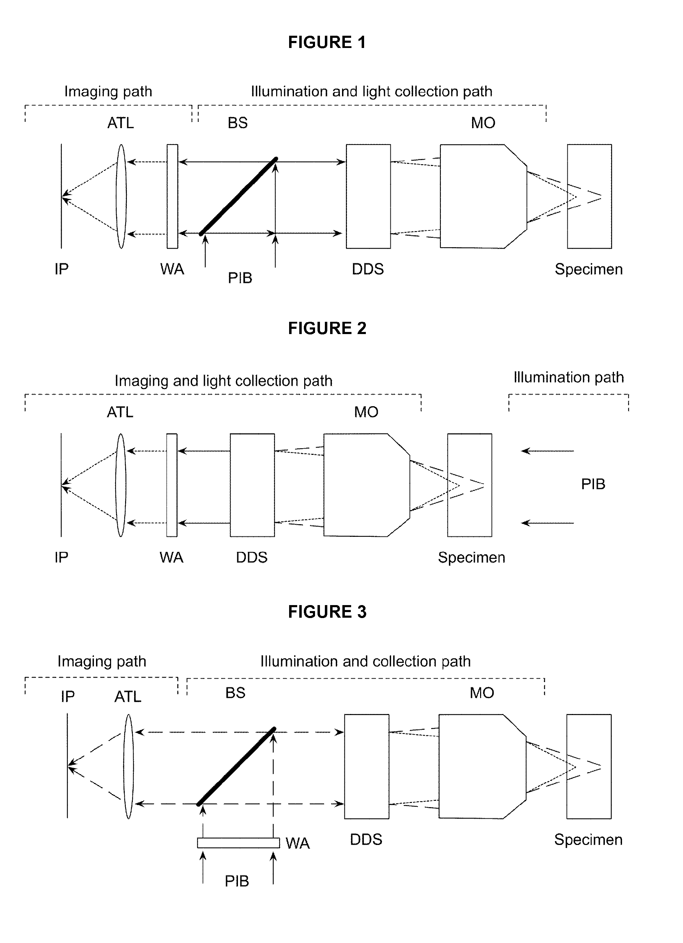

Figure 1 shows a general scheme of the instrument subject of this invention. It is formed only by standard optical elements plus a system that allows selecting the wavelength which forms the corresponding image. This invention allows the motorization of some of its elements, even when this is not a necessary requirement for its operation. In the field of optics the arrangement shown in Fig.1, where the illumination path coincides with the light collection path but with opposite direction, is called epi-illumination mode. In Figure 1 and onwards the different line types (continuous, dashed, dotted, ...) show schematically the optical path of the different wavelengths.

In Figure 1, a polychromatic illumination beam is introduced in the DDS by means of a beam splitter. The purpose of the DDS is to generate a light beam with a wavelength-dependent divergence. If the materials used in the DDS feature normal dispersion (as opposite to anomalous dispersion), the longer wavelength components will enter the entrance pupil of the microscope objective with larger divergence than the shorter wavelength ones. Beams with different wavelengths will thus enter the microscope objective with different divergences and different wavelength components will therefore be focused at different depths of the specimen.

The accessible depth range (ADR, depth difference between the planes at which the shortest and the longest wavelengths are focused) is directly related to the chromatic dispersion of the material forming the DDS: the higher the dispersion, the longer the ADR. For a highly dispersive material it is possible to obtain what is called an "extended depth-of-focus", consisting of the superposition of the depths-of-focus of the individual wavelength components of the polychromatic illumination beam.

The light that is back-reflected and back-scattered at the different focal planes corresponding to the different wavelengths is recombined, due to the reversibility principle in optical ray tracing, into a single polychromatic beam after having passed the DDS again. The back-propagating polychromatic beam contains information of all the planes that have been accessed inside the specimen. This back-propagating beam passes through the beam splitter (BS) and enters the imaging path. It then passes the WA, which selects a certain wavelength range corresponding to a certain depth range of the specimen.

The resulting monochromatic or quasi-monochromatic beam is subsequently focused by an achromatic tube lens (ATL) onto the image plane of the device, leading to a sharp image of the corresponding specimen section. It is particularly important for the correct performance of the instrument that the tube lens is achromatic. This ensures that a sharp image of the corresponding specimen section is obtained formed, no matter which wavelength is selected by the WA.

By modifying step-by-step the wavelength interval selected by the WA, images of the different depths sections are formed consecutively, and rapidly without the need of using precision moving elements to translate the sample along the optical axis or transversally to it. The images can be recorded by charge coupled device (CCD), complementary metal-oxide-semiconductor (CMOS) cameras or can be visually inspected.

Along its simplicity, the instrument described in the present invention is of low cost due to the fact that all the optical elements required are standard in the field of optics. Additionally, it has the advantage of obtaining images of a continuum of focal planes of the specimen within the ADR, all of them being selectable via the selection of a wavelength which corresponds to the desired depth.

### Detailed description of the invention

The invention consists of an instrument for obtaining cross sectional optical images of a specimen without the need of moving elements in any of the three spatial axes. For this purpose, the instrument combines a divergence dispersing system (DDS) and a wavelength analyzer (WA), yielding images at different wavelengths that correspond to different depths in the specimen. The invention achieves this goal by means of simple standard optical elements, comprising a robust and low-cost device.

For the correct performance of the device, the polychromatic illumination beam has to undergo a certain amount of chromatic dispersion in a DDS, deliberately introduced in the beam path (see Fig.1).

Without limiting the invention, one implementation of a DDS is the use of a singlet made of a highly dispersive glass (in the field of optics a singlet is defined as a simple optical element made of a single material, such a simple lens). This singlet can be formed by spherical surfaces although the use of aspherical surfaces is preferable in order to enable the suppression of spherical aberration so as to improve the image quality. Alternatively, a set of exchangeable dispersive singlets (mounted in a wheel) could be used, leading to a DDS with selectable divergence characteristics and thus selectable ADR's. Non-conventional elements like axicons (optical elements characterized by having a conical and a flat surface) could be used for the purpose, or combinations of conventional and non-conventional optical elements. The dependence of the divergence on wavelength at the output of the DDS will be given by the geometry, the material and the lay-out of the constituting elements of the DDS.

The different wavelengths of the polychromatic illumination beam leaving the DDS with different divergences are focused by the microscope objective at different depths in the specimen. The back-reflected or back-scattered light at different depths is subsequently re-collimated into a single beam by the DDS itself.

After the second pass though the DDS (after being reflected in the specimen, according to the scheme in Fig.1) the collimated polychromatic beam contains all the information of the images of the depth sections within the ADR. After passing the beam splitter, the re-collimated beam enters the imaging path, where the WA is located (in this example). This element performs the depth selection of the desired plane through the selection of the wavelength that is transmitted through it. The resulting beam is focused by an ATL on the image plane, leading to a sharp image of the corresponding specimen section contained in the ADR and determined by the WA.

Without limiting the invention, a possibility for implementing the WA may consist of a chromatic filter wheel (manually driven or motorized), in which each filter covers a given spectral interval, thus enabling the formation of an image of a given plane contained in the ADR.

Another possibility, not limiting the invention, is to build the WA from a combination of two polarizing elements and a birefringent element (plate) inserted in-between (all these elements are characterized by an extraordinary propagation axis). Thus, by changing at least one of the angles between their extraordinary axes, it is feasible to select the transmitted wavelength and thus the specimen depth forming the image. A possible implementation of special interest could be to place a CCD camera at the image plane and to motorize any of the previously indicated WA elements (polarizers, birefringent element) in order to acquire sequentially images of all planes contained in the ADR. This is achieved by synchronizing the CCD camera exposure time to the time required for a full wavelength cycle in the WA.

An alternative for the implementation of the WA is the use of a wavelength-tunable light source. In this way, the light source itself enables the wavelength selection, thus becoming a part of the WA.

A particular implementation of the present invention is shown in Figure 2. In this case, illumination is performed in transmission, which implies that the image is formed using the light transmitted through the specimen. The polychromatic light beam illuminates the full ADR, passing then the microscope objective and the different wavelength components being re-collimated after passing through the DDS. After the wavelength selection by the WA, an image is formed by the ATL in a way similar as shown in Fig.1.

In a different implementation of the invention, in order to improve the performance for illumination in transmission mode, the illumination path can be modified by adding a condenser lens or equivalent optical element, which enables matching the numerical aperture of the illumination beam to that of the microscope objective.

In another implementation of the invention, the configuration described in the previous paragraph is complemented by placing the WA in the illumination path. Additionally, it is also possible to use a second DDS in the illumination path in order to optimize illumination and the light collection.

Another particular implementation of the invention comprises the insertion of the WA in the illumination arm, as shown in Figure 3. If the WA is motorized this implementation has the advantage over previously indicated schemes of isolating the imaging path from vibrations potentially introduced by the mechanically moving element.

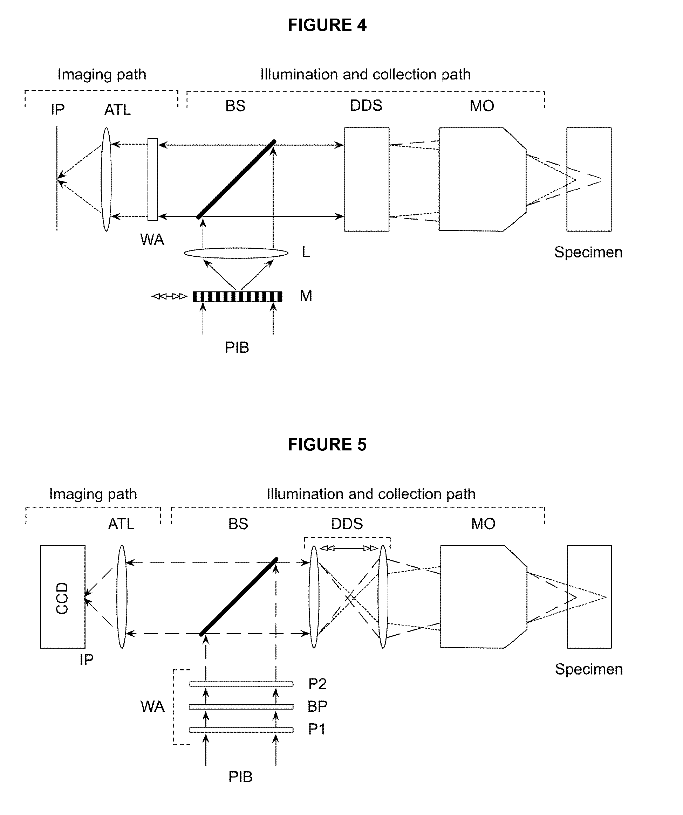

Another particular implementation of the invention comprises the combination of any of the above described configurations with the technique of optical sectioning by structured illumination (Figure 4). In such a implementation, the use of structured illumination in combination with the DDS provides for each wavelength a reference pattern focused at a different depth inside the specimen. In this way, it is not necessary to move the specimen with respect to the instrument in any of the three spatial directions, neither for acquiring any of the images nor for selecting the corresponding depth inside the specimen.

### FIGURE DESCRIPTIONS

**Figure 1****: Schematic view of a simple configuration of the instrument described in the invention.** It is shown how the polychromatic illumination beam (PIB), after passing the non-polarizing beam splitter (BS) in the illumination path, experiences positive dispersion induced by means of a divergence dispersing system (DDS), thus generating wavelength-dependent beam divergence at the entrance pupil of the microscope objective (MO). As a consequence, the light is focused at different wavelength-dependent depths inside the sample. The reflected and/or backscattered light at any of the different depth planes is collimated into a single beam and passes the wavelength analyzer (WA), which selects a specific wavelength to form an image at the image plane (IP) by means of an achromatic tube lens (ATL), thus selecting the desired sample depth to be imaged. The optical paths of different spectral components are drawn schematically with dotted or dashed lines, whereas the path of the polychromatic beam is drawn with solid lines.
**Figure 2****: Schematic view of the instrument described in the invention in transmission configuration.** This scheme includes the same components shown in Figure 1, but the illumination is performed in transmission. The optical paths of different spectral components are drawn schematically with dotted or dashed lines, whereas the path of the polychromatic beam is drawn with solid lines.
**Figure 3****: Schematic view of the instrument described in the invention, in which the focal plane is selected in the illumination path.**
   This scheme includes the same components shown in Figure 1, but the selection of the focal plane is performed by inserting the WA in the illumination path. The figure shows an instantaneous state of a single wavelength passing the WA (dashed lines), whereas other wavelengths, which will be selected in further states of the WA (being a rotating filter wheel, for instance), are also shown (dotted lines). The path of the polychromatic beam is drawn with solid lines.
**Figure 4****: Schematic view of the instrument described in the invention, in which a mask (M) and a lens (L) is introduced in the illumination path.**
   This scheme includes the same components shown in Figure 1 together with a mask (M) and a lens (L) being introduced in the illumination path. The lens and the mask are placed such that the plane of the mask and the image plane form conjugate planes. The mask allows displacement along the directions of the double headed arrow. The figure shows an instantaneous state of a single wavelength passing the WA (dotted lines), whereas other wavelengths, which will be selected in further states of the WA (being a rotating filter wheel, for instance), are also shown (dashed lines). The path of the polychromatic beam is drawn with solid lines.
**Figure 5****: Schematic view of a more complex configuration of the instrument described in the invention.** The figure shows a configuration of the invention, in which the wavelength analyzer (WA) is placed in the illumination path and is composed of two polarizers (P1 and P2) and a birefringent plate (BP), whose rotation state is controlled by a motor. The divergence dispersing system (DDS) is formed by two aspheric singlets with strong dispersion. In this case, the image formed at the image plane (IP) is recorded by a CCD camera. The figure shows an instantaneous state of a single wavelength passing the WA (dashed lines), whereas other wavelengths, which will be selected in further states of the WA, are also shown (dotted lines).

### EXAMPLE OF AN IMPLEMENTATION OF THE INVENTION

As a practical case of the implementation of the invention, and without limiting it, this section describes an optical instrument that implements in a simple way the two main concepts subject of the invention. Figure 5 shows the main elements of such an instrument.

The polychromatic beam enters first a broadband polarizer (P1). The resulting linearly polarized beam passes then a birefringent plate (BP), which rotates the polarization of the different spectral components of the beam by different amounts. In this way, the second polarizer (P2) allows only the transmission of a narrow spectral interval (shown as a discontinuous line in Figure 5). The set of the three elements (P1, BP and P2) constitutes the wavelength analyzer (WA) of the particular implementation of the invention shown in Figure 5.

Additionally, the BP can be motorized, rotating at a constant speed, so that adjacent wavelength bands are selected by P2. According to the ray trace scheme shown in Figure 5, adjacent spectral fractions, (indicated as discontinuous and dashed lines in the figure) will be selected. The wavelength (depth) direction can be inverted by simply rotating the rotation direction of the motor. The wavelength selection in this approach is continuous rather than discrete, enabling the precise selection of the depth of the specimen section to be imaged as a function of the angular position of the motor rotating the BP.

The wavelengths within the spectral range that have been selected by P2 then pass the non polarizing beam splitter (BS), which directs them to the DDS. In this example, and without limiting the invention, the DDS is formed by a 4f-system composed of 2 aspheric singlets made of highly dispersive glass (normal dispersion). They are aspheric in order to correct for spherical aberration effects, thus preserving the optical quality of the image obtained at the IP.

Additionally, in this example the DDS features the possibility of modifying, manually or using a motorized stage, the distance between the singlet lenses forming the DDS (as indicated by the double headed arrow in the DDS assembly in Figure 5). This option makes the implementation even more versatile, since it allows changing the divergence range for a given wavelength interval, and thus the ADR for a given specimen under study.

The beam at the output of the DDS has a divergence defined by characteristics of the DDS and by the particular rotation state of the WA. The beam is thus focused at a given depth of the specimen, depending on its divergence at the entrance pupil of the MO.

The reflected and back-scattered components are re-collimated on their way back along the collection path, entering the image forming path after passing the BS. The ATL focuses then the beam at the IP in order to form an image of the corresponding specimen cross section. A recording device located at this plane (a CCD in this example) enables to sequentially record a series of images corresponding to different depths of the specimen under study.

Under these conditions, there are two alternative options for recording different depth cross sections of the specimen in this specific implementation.

In the first one, a motor rotates the BP in a continuous way. In this case, the depth range of the corresponding cross sections is defined by adjusting the CCD exposure time, making the CCD to become an essential part of the WA. In the second one, the motor performing the BP rotation is a step motor. In this case, the image recorded at the CCD corresponds to a single depth cross section.

An alternative application of the previously discussed configuration is the acquisition of integrated images of all cross sections within the ADR. For this purpose, the integration time of the CCD can be adjusted to match the time necessary for the WA to complete a cycle. In this way an integrated image with all cross sections within the ADR is recorded. Alternatively, it is also possible to use a digital imaging processing system to perform image integration. The combination of an image processing system with the optical system enhances the versatility of the implementation, since image reconstruction tasks can be performed by the digital imaging system, as well as possible subsequent image processing tasks required for image quality improvement or for modifying the data visualization mode.

## Claims

1. An instrument for creating images from a specimen and **characterized by** being a wide-field technique and comprising at least:
a. a divergence dispersing system, which produces a light beam whose individual spectral components have different divergences in order to form images of the specimen at different depths, and
b. a wavelength analyzer, which selects the light wavelength or light wavelength range in order to form an image of the specimen at a specific depth.

2. The instrument according to claim 1, wherein the light beam is polychromatic.

3. The instrument according to claim 1, wherein the light beam is monochromatic.

4. The instrument according to claim 3, wherein the light beam is produced by a single or multiple light sources, which allows selecting the light wavelength.

5. The instrument according to any of the preceding claims, wherein the divergence dispersing system collects the light beam reflected by the specimen.

6. The instrument according to claims 1 to 4, wherein the divergence dispersing system collects the light beam transmitted through the specimen.

7. The instrument according to any of the preceding claims, wherein a spatial light intensity pattern is projected onto the specimen, by means of a mask inserted in the light beam and which is displaced laterally with respect to the optical axis.

8. The instrument according to any of the preceding claims, wherein the available range of the imaging depth can be varied by means of a divergence dispersing system, which comprises at least two single lenses, whose separation can be changed in a controlled way.

9. The instrument according to any of the preceding claims, wherein the divergence dispersing system comprises a system for exchanging optical elements.

10. The instrument according to any of the preceding claims, wherein the wavelength analyzer comprises a spectral filter or a set of interchangeable spectral filters.

11. The instrument according to any of the preceding claims, wherein the wavelength analyzer comprises the combination of at least one polarizer and one birefringent waveplate, whose optical axes are placed at an angle that can be changed in a controlled way in order to select the light wavelength.

12. The instrument according to any of the preceding claims, wherein any of the elements comprising the divergence dispersing system or the wavelength analyzer is motorized.

13. The use of the instrument defined in any of the preceding claims for obtaining images of a specimen at different depths of the specimen.

14. The use of the instrument defined in any of claims 1 to 12 for obtaining a single image, which integrates several images at different depths of the specimen.

15. The use of the instrument defined in any of claims 1 to 12 in combination with a digital image reconstruction or processing system.

16. The use of the instrument defined in any of claims 7 to 12 for performing optical sectioning at different depths of the specimen.
